# EUROPEAN PATENT SPECIFICATION

(11) **EP 0 804 002 B1**
(45) Date of publication and mention of the grant of the patent: **16.06.2004**
(21) Application number: 96201105.2
(22) Date of filing: 25.04.1996
(51) Int. Cl.: H04L 7/04, H04J 3/06

(54) **Method and device for detecting the presence of a codeword in an incoming dataword**
Verfahren und Vorrichtung zur Erkennung der Anwesenheit eines Kodewortes innerhalb eines ankommenden Datenwortes
Méthode et dispositif pour la détection de la présence d'un mot de code dans un mot numérique arrivant

(43) Date of publication of application: 29.10.1997
(73) Proprietor: ALCATEL, 75008 Paris (FR)
(72) Inventor: Vandenabeele, Peter Michel Noel, 2500 Lier (BE); Sierens, Christiaan Hendrik Jozef., 2640 Mortsel (BE); Botte, Christian Raymond Albert, 9090 Melle (BE)
(74) Representative: Narmon, Gisèle Marie Thérèse

(56) References cited:
- EP-A- 0 608 717
- WO-A-94/16512
- US-A- 5 101 401
- US-A- 5 448 571

## Description

The present invention relates to a method to detect the presence of a codeword in an incoming dataword as described in the preamble of claim 1, a device realizing said method as described in the preamble of claim 5 and a receiver and a communication system including this device as described in the preambles of claims 9 and 10 respectively.

Such a method and device realising the latter method are already known in the art, e.g. from the book 'Digital commmunications fundamentals and applications' of Bernard Sklar, published by Prentice Hall, 1988 a division of Simon & Schuster, Englewood Cliffs, New Jersey 07632 and more particular from pages 461 to 464 thereof. Therein an approach to provide frame synchronisation for communication systems with the use of a synchronisation codeword is described. A receiver, knowing the codeword, must constantly search for the codeword in the incoming dataword. The presence of the codeword is detected by interpreting the incoming dataword and by determining whether or not a predetermined condition regarding the codeword is accomplished. Detecting the codeword indicates a known position in the incoming dataword. As described on page 461, the disadvantage of the method used in this known receiver is that the codeword must be relatively long to keep the probability of false detection low. As mentioned in the book of Bernard Sklar, the complexity of a correlator included in the receiver and usually used for this approach is proportional to the length of the codeword. As a result, the correlator must be relatively complicated and requires a lot of hardware.

An object of the present invention is to provide a device and a method to detect the presence of a codeword in an incoming dataword with a low probability of false detection such as the above known receivers but which have not the above drawback, i.e. which require less hardware than the latter receivers.

A method and apparatus for determining byte synchronisation whithin a serial receiver using several non-overlapping sample words are known from US-A-5 448 571.

According to the present invention the object is achieved by means of the method described in claim 1, realised with the device described in claim 5, used in a hybrid fiber coax network as described in claims 4 and 8 and a receiver and a communication system as described in claims 9 and 10 respectively.

Indeed, due to the fact that not only the first subword, but also alternative subwords are checked to fulfill predetermined conditions regarding subcodewords, the first subcodeword can be relatively short compared to the codeword used in the known method.

As a result and provided that the conditions are well chosen, less hardware is required than in the known device.

Moreover, the low level of false detection is obtained by combining the result of the first interpretion of a first subword with an alternative interpretion of an alternative subword. The alternative subword must at least partially overlap the first subword in order to have interpreted at least one symbol included in the first subword for at least two times, which contributes to the low level of false detection of the codeword.

A way of chosing the conditions is described in claims 2 and 3 and is realised by a device according to claim 6 and 7.

The above mentioned and other objects and features of the invention will become more apparent and the invention itself will be best understood by referring to the following description of an embodiment taken in conjunction with the accompanying drawings wherein :
Fig. 1 represents a device to detect the presence of a codeword;
Fig. 2 represents a predetermined codeword including subcodewords;
Fig. 3 represents an incoming dataword and including subwords.

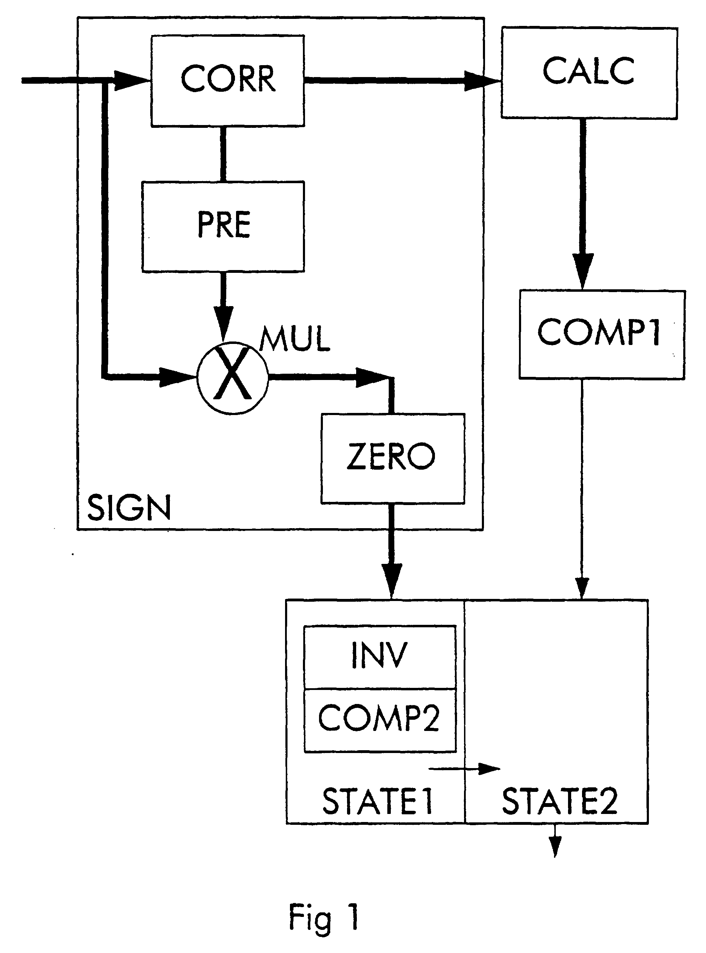

First the environment and use of this particular embodiment will be explained. As follows, the different blocks included in the device to detect the presence of a codeword shown on figure 1 will be described. Based on this description the working of the device of the invention will be described by means of the functions executed by these different blocks. Specific details with respect to implementation of these blocks will not be given since it will be clear for a person skilled in the art from the functional description how to implement the different blocks.

This preferred embodiment is used in a receiver with the general objective to receive and to decode a sequence of quadriphose shift keying QPSK modulated bursts which are transmitted from a number of remote stations over a shared medium e.g. coax network (Hybrid Fiber Coax network HFC) to a central station which includes this receiver. This multipoint to point transmission is working following the principle of time division multiple access (TDMA). Each incoming burst is transmitted by a remote station during a predefined timeslot. However, the fact that a burst is actually transmitted must be confirmed and also the position of the incoming burst inside the timeslot must be determined. These parameters are estimated for every incoming burst with the help of a codeword consisting of a predefined symbol sequence and which is included in the header of each burst transmitted by a remote station. The codeword is known by the receiver and must be recognized by this receiver. Identification and estimation of additional parameters to realise a total synchronisation between the remote stations and the central station goes beyond the scope of this invention. The aim is the detection of the presence of the codeword in an incoming burst called herein incoming dataword.

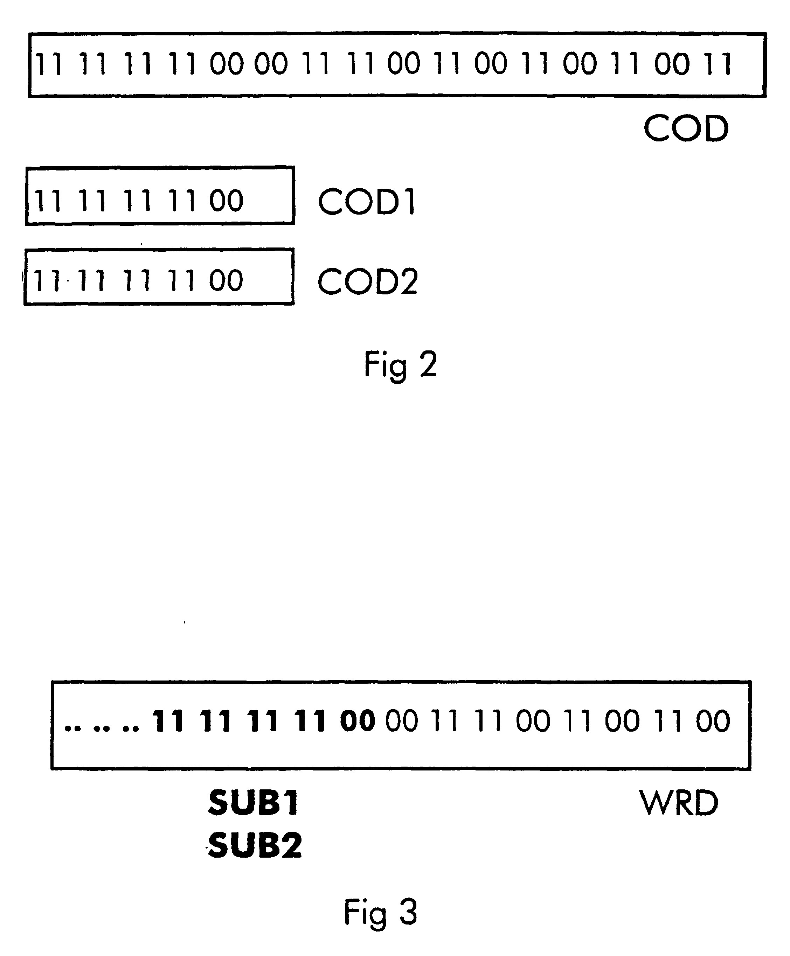

The predefined symbol sequence of the codeword COD which is used for this preferred embodiment is shown in figure 2. A first subcodeword COD1 and a second subcodeword COD2 are both defined as part of this codeword COD and are in this preferred embodiment totally overlapping each other. The reason why this predefined symbol sequence of this codeword COD and wordlength of these subcodewords COD1, COD2 are choosen in this way will become apparent in the following paragraphs.

The device to detect the presence of a codeword shown in figure 1 includes three main blocks which are not shown in figure 1 in order not to overload the figure but which are mentioned in this description to explain better the structure of the device.

The first main block includes a correlator CORR, a calculator CALC and a comparator COMP1. The correlator CORR which is realised by a phase matched filter is coupled to an input of the device of the invention and to the calculator CALC. The calculator CALC is coupled to the comparator COMP1.

The second main block includes sign detecting means SIGN, an inversion detector INV and comparator means COMP2.

The sign detecting means SIGN includes the same correlator CORR as from the first main block, a phase reference estimator PRE, a complex multiplexer MUL and a zero crossing device ZERO. The correlator CORR is coupled to the phase reference estimator PRE which is coupled to the complex multiplexer MUL. The complex multiplexer MUL which is coupled to the same input of the device of the invention as to which the correlator CORR is coupled is also coupled to the zero crossing device ZERO.

The zero crossing device ZERO is coupled to the inversion detector INV which is coupled to the comparator means COMP2. The inversion detector INV and the comparator means COMP2 are realised by a first part STATE1 of a state machine.

The third main block is realised by a second part STATE2 of the same state machine which is also coupled to the comparator COMP1 of the first main block and an output of the device of the invention.

The working of the device to detect the presence of a codeword is as follows. An incoming dataword is presented to an input of the device of the invention. Figure 3 shows an incoming dataword WRD which includes a first subword SUB1 and second subword SUB2. These subwords SUB1, SUB2 have a predetermined length which is equal to the length of the respectively subcodewords COD1, COD2 and which are in this preferred embodiment equal to each other and located on the same place in reference to the incoming dataword WRD. In order not to overload figure 1 the incoming data word WRD is not shown on figure 1.

The first subword SUB1 is interpreted by the first main block in order to check the accomplishment of a first condition. The correlator CORR calculates the correlation of the first subword SUB1 presented to the correlator CORR with the first subcodeword COD1 1 and provides a correlated signal which is indicative for the result of the correlation. The filter coefficients of the phase match filter realising the correlation and the predetermined first subcodeword COD1 are optimised and selected in order to provide a correlated signal with an optimal signal to noise ratio and whereof the powervalue, dependent of the known powerlevel of the incoming dataword and the shape of the correlated signal, is a good parameter for the measure of correlation.

It has to be noticed here that since the incoming dataword WRD is a QPSK modulated signal the input of this preferred embodiment represents two terminals : one terminal for the real part and one terminal for the imaginary part of the incoming signal. It will be obvious for a person skilled in the art that as well the real part as the imaginary part of the incoming dataword are correlated in the correlator CORR and that the correlator CORR provides also a complex number wherof the powervalue is calculated by adding the squares of the real and the imaginary part of the complex number.

The comparator COMP1 compares the calculated powervalue to a predetermined thresholdvalue and decides that the first condition is accomplished when the powervalue exceeds this predetermined thresholdvalue. At that time a first control signal is generated and provided to the third main block i.e. the second part of the state machine STATE2.

The predetermined thresholdvalue was calculated out of the powerlevel of the correlated signal provided by correlating the first subcodeword, as incoming subword, with itself and the known powerlevel of that first subcodeword as incoming dataword. This predetermined optimised thresholdvalue was adjusted before starting the detection of the presence of a codeword.

The second subword SUB2 is interpreted by the second main block in order to check the accomplishment of a second condition.

First, the sign detecting means SIGN determines the signs of the consecutive symbols of the second subword SUB2 i.e. the phases of the vectors representing the constellations of the QPSK modulated symbols in a vector space. So, the correlated signal presented by the correlator CORR is also used by the phase reference estimator PRE to make an initial reference phase estimation and to provide a complex reference phase. The complex multiplexer MUL performs a complex multiplication of the incoming subword SUB2 which is a complex dataword with this complex reference phase. The need for this processing step originates from the phase difference between the phase of the carrier of the transmitter included in the remote station and the phase of the carrier of the receiver included in the central station. After the complex multiplication this phase difference is eliminated and complex consecutive symbols are provided to the zero crossing device ZERO which returns the sign of the real part of these complex consecutive symbols being plus (+) or minus (-). These signs which indicate in fact the phases of the vectors representing the constellations of antipodal QPSK modulated symbols in a vector space e.g. 11 and 00 are provided to the inversion detector INV which analyses the sequence of these signs and detects the inversions between the signs.

As follows, these inversions are compared by the comparator means COMP2 with the expected inversions of the consecutive symbols of the second subcodeword COD2 and the comparator means COMP2 decides that a second condition is accomplished when the inversions match the expected inversions.

Since the codeword COD and length of the second subcodeword COD2 are well choosen as shown in figure 2 the first expected inversion of the second subcodeword COD2 lies between the last but one QPSK symbol and the last QPSK symbol. At that time a second control signal is generated and provided to the third main block i.e. second part of the state machine STATE2.

Finally, this third main block i.e. second part of the state machine STATE2 combines the results of the first main block and the second main block and decides on reception of the first control signal and the second control signal that the codeword COD has been detected. The third main block generates a third control signal to confirm the detection of the presence of a codeword and provides it to an output of the device of the invention.

Once the presence of the codeword COD has been detected the remaining part of the incoming dataword or included alternative subwords might be further interpreted while in the meantime the synchronisation process can be performed.

In this preferred embodiment the remaining part of the incoming dataword is interpreted by the second main block by comparing the inversions of the signs of the consecutive symbols of the remaining part of the incoming dataword with the expected inversion of the signs of the remaining part of the codeword in order to decide that a true total codeword untill the last QPSK symbol is received when the inversions match. In the meantime the synchronisation process is performed e.g. upon reception of a confirmation of the detection of the presence of the codeword the phase reference estimator PRE blocks the actual complex reference phase which is in fact the estimated phase at the time of the first inversion of the incoming dataword and a coherent detection or differential detection can be performed.

A QPSK decoder (not shown) starts decoding the incoming userdata included in the incoming burst upon reception of the confirmation of a true total codeword and once the necessary additional parameters to realise synchronisation are identified.

It has to be remarked that although in the above description a total match of the inversions with the expected inversions is required, the present invention is not restricted to this total match. Indeed, it is clear to a person skilled in the art how to adapt the above described preferred embodiment to allow o certain degree of error for this total match.

Yet another remark is that although in this preferred embodiment the first subcodeword COD1 and the second subcodeword COD2 are totally overlapping each other, the present invention is not restricted to this choice of subcodewords. Indeed, it is dear to a person skilled in the art how to adapt the above described device to e.g. a device to detect the presence of a codeword wherefor the second subcodeword COD2 has been defined two QPSK symbols longer and whereof the second main block expects an inversion between the fourth and the fifth symbols and a second inversion between the sixth and the seventh symbols. For such a device wherefor the first and second subword are still partially overlapping the expected confirmations of the first and second main block will still be received by the third main block within a respectable time interval.

Furthermore, it also has to be noticed that the use of a device to detect the presence of a codeword according to the present invention is not restricted to the interpretation of the first subword by the use of a correlation operation as described in the first main block or to the interpretation of the second subword by the use of sign inversions as described in the second main block. Indeed, the way to interprete the subwords are interchangeable and even more the invention is not limited to the use of such a correlation operation or such sign inversions to interprete the subwords. Indeed, another way to interprete a subword and to determine whether or not a condition regarding the incoming subword has been accomplished can be performed by the method used in e.g. a receiver from AT&T Microelectronics. It is obvious to a person skilled in the art to determine the following steps by interpreting the datasheet of the *T7664* / *T7665* Quad Broadband Interactive Network Transmitter / Receiver integrated circuits from *AT&T* Microelectronics :
- determining the phase of the incoming data and providing thereby a recovered phase;
- decoding of the incoming data based on the recovered phase and providing thereby decoded data;
- comparing the decoded data with a known framing pattern, equivalent to the codeword used in this application, and deciding that the condition has been accomplished when the comparing is succesfull.

It should also be noted that although the described device to detect the presence of a codeword includes two main blocks to interprete two subwords it is obvious to a person skilled in the art that the present invention is not limited to two interpretations of two subwords. Indeed, alternative interpretations of alternative subwords can be performed whereof the results can be combined in different ways in order to obtain e.g. the desired low level of false detection.

It has to be remarked that this low level of false detection can also be obtained by e.g.
- perfoming the method to detect the presence of a codeword only when a previous condition is accomplished e.g. only starting to detect the presence of a codeword within a predefined timewindow which is part of the predefined timeslot wherein the incoming burst is transmitted by a remote station; or by
- combining the different results regarding the interpretations of subcodewords with a following condition e.g. only accepting the confirmation of the detection of the presence of a codeword within that predefined timewindow.

Also a remark is that the use of a device to detect the presence of a codeword according to the present invention is not restricted to an incoming dataword included in the header of a QPSK modulated burst. The present invention can also be used to detect the presence of a codeword in e.g. a consistent datastream in order to e.g. check synchronisation by looking for periodic repetitions of the codeword as described in the book from Bernard Sklar on page 471 and the present invention can also be used to detect the presence of a codeword in an incoming dataword which is not QPSK modulated but e.g. BPSK modulated (binary phase shift keying) or even not PSK modulated but e.g. ASK modulated (amplitude shift keying).

Finally, it has to be noted that, although the above described embodiment of a device to detect the presence of a codeword is dedicated to support a receiver in central station of a HFC network (hybrid fiber coax), the present invention is not restricted to this field of application. Indeed, it is clear to a person skilled in the art to adapt the above described device to be applicable in other media e.g. a radio transmission and to be applicable in e.g. point to point transmission.

While the principles of the invention have been described above in connection with specific apparatus, it is to be clearly understood that this description is made only by way of example and not as a limitation on the scope of the invention.

## Claims

1. Method for detecting the presence of a codeword (COD) in an incoming dataword (WRD) for use e.g. in a receiver of a communication system, said method including the step of :
- determining by interpreting a first subword (SUB1) included in said dataword (WRD) whether or not a first condition is accomplished;
**characterised in that** said method further includes the steps of :
- determining by interpreting at least one alternative subword (SUB2) included in said dataword (WRD) whether or not at least one alternative condition is accomplished, said alternative subword (SUB2) at least partially overlapping said first subword (SUB1);
- combining the results of the previous steps to determine whether or not said codeword (COD) has been detected.

2. A method according to claim 1, **characterised in that** said step of determining whether or not said first condition is accomplished includes the steps of :
- performing the correlation of said first subword (SUB1) with a predetermined first subcodeword (COD1) included in said codeword (COD) and providing a correlated signal which is indicative of the result of said correlation;
- calculating the power of said correlated signal and providing thereby a powervalue;
- comparing said powervalue with a predetermined thresholdvalue, said first condition being accomplished when said powervalue exceeds said predetermined thresholdvalue.

3. A method according to claim 1, **characterised in that** said step of determining whether or not said at least one alternative condition is accomplished includes the steps of :
- determining the signs of consecutive symbols included in a said alternative subword (SUB2);
- determining inversions between said signs;
- comparing said inversions with expected inversions between the signs of consecutive symbols of a predetermined alternative subcodeword (COD2) included in said codeword (COD), said alternative condition being accomplished when said inversions substantially match said expected inversions.

4. A method according to claim 1 **characterised in that** said method is for use in a hybrid fiber coax network.

5. A device to detect the presence of a codeword (COD) in an incoming dataword (WRD) for use e.g. in a receiver of a communication system, said device including :
- first determining means (CORR, CALC, COMP1) to interprete a first subword (SUB1) included in said dataword (WRD) and to determine whether or not a first condition is accomplished;
**characterised in that** said device further includes :
- at least one alternative determining means (SIGN, INV, COMP2) to interprete at least one alternative subword (SUB2) included in said dataword (WRD) and to determine whether or not at least one alternative condition is accomplished, said alternative subword (SUB2) at least partially overlapping said first subword (SUB1);
- combining means (STATE2) to combine the results of said first determinig means and said at least one alternative determining means and to determine whether or not said codeword (COD) has been detected.

6. A device to detect the presence of a codeword (COD) in an incoming dataword (WRD) according to claim 5, **characterised in that** said first determining means (CORR, CALC, COMP1) includes:
- correlating means (CORR) to perform a correlation of said first subword (SUB1) with a first subcodeword (COD1) included in said codeword (COD) and to provide thereby a correlated signal which is indicative of the result of said correlation;
- calculating means (CALC) to calculate the power of said correlated signal and to provide thereby a powervalue;
- a comparator (COMP1) to compare said powervalue to a predetermined thresholdvalue and to decide that said first condition is accomplished when said powervalue exceeds said predetermined thresholdvalue.

7. A device to detect the presence of a codeword (COD) in an incoming dataword (WRD) according to claim 5, **characterised in that** said at least one alternative determining means (SIGN, INV, COMP2) includes :
- sign detecting means (SIGN) to determine the sign of consecutive symbols included in a said alternative subword (SUB2);
- inversion detecting means (INV) to determine the inversions between said signs;
- comparator means (COMP2) to compare said inversions with expected inversions between the signs of consecutive symbols of an alternative subcodeword (COD2) included in said codeword (COD) and to decide that a said alternative condition is accomplisched when said inversions substantially match said expected inversions.

8. A device to detect the presence of a codeword (COD) in an incoming dataword (WRD) according to claim 5, **characterised in that** said device is used in a hybrid fiber coax network.

9. A receiver for use in a communication system to receive incoming data words and to acquire synchronisation of e.g. frame, phase or symbol **characterised in that** said receiver includes a device to detect the presence of a codeword (COD) in an incoming data word (WRD) according to any of the claims 5 to 8.

10. A communication system **characterised in that** said communication system includes a device to detect the presence of a codeword (COD) in an incoming dataword (WRD) according to any of the claims 5 to 8.

## Patentansprüche

1. Verfahren zur Erkennung der Anwesenheit eines Kodewortes (COD) in einem ankommenden Datenwort (WRD) zur Verwendung z.B. in einem Empfänger eines Kommunikationssystems, wobei das Verfahren den folgenden Schritt umfasst:
- Feststellung durch Interpretation eines ersten Unter-Wortes (SUB1), das in dem Datenwort (WRD) enthalten ist, ob eine erste Bedingung erfüllt ist oder nicht; **dadurch gekennzeichnet, dass** das Verfahren weiterhin folgende Schritte umfasst:
- Feststellung durch Interpretation mindestens eines alternativen Unter-Wortes (SUB2), das in dem Datenwort (WRD) enthalten ist, ob mindestens eine alternative Bedingung erfüllt ist oder nicht, wobei das alternative Unter-Wort (SUB2) das erste Unter-Wort (SUB1) mindestens teilweise überlappt;
- Kombination der Ergebnisse der vorherigen Schritte zur Bestimmung, ob das Kodewort (COD) erkannt wurde oder nicht.

2. Ein Verfahren gemäß Anspruch 1, **dadurch gekennzeichnet, dass** der Schritt der Feststellung, ob die erste Bedingung erfüllt ist oder nicht, die folgenden Schritte umfasst:
- Durchführung der Korrelation des ersten Unter-Wortes (SUB1) mit einem vorher festgelegten ersten Unter-Kodewort (COD1), das in dem Kodewort (COD) enthalten ist und Bereitstellung eines korrelierten Signals, welches das Ergebnis der Korrelation anzeigt;
- Berechnung der Leistung des korrelierten Signals und dadurch Bereitstellung eines Leistungswertes;
- Vergleich des Leistungswertes mit einem vorher festgelegten Schwellwert, wobei die erste Bedingung erfüllt ist, wenn der Leistungswert den vorher festgelegten Schwellwert überschreitet.

3. Ein Verfahren gemäß Anspruch 1, **dadurch gekennzeichnet, dass** der Schritt der Feststellung, ob die mindestens eine alternative Bedingung erfüllt ist oder nicht, die folgenden Schritte umfasst:
- Feststellung der Vorzeichen aufeinander folgender Symbole, die in dem alternativen Unter-Wort (SUB2) enthalten sind;
- Feststellung von Vorzeichen-Invertierungen;
- Vergleich der Invertierungen mit erwarteten Invertierungen zwischen den Vorzeichen aufeinander folgender Symbole eines vorher festgelegten alternativen Unter-Kodewortes (COD2), das in dem Kodewort (COD) enthalten ist, wobei die alternative Bedingung erfüllt ist, wenn die Invertierungen im Wesentlichen mit den erwarteten Invertierungen übereinstimmen.

4. Ein Verfahren gemäß Anspruch 1, **dadurch gekennzeichnet, dass** das Verfahren für die Verwendung in einem hybriden Faser-Koaxial-Netzwerk ist.

5. Eine Vorrichtung zur Erkennung der Anwesenheit eines Kodewortes (COD) in einem ankommenden Datenwort (WRD) zur Verwendung z.B. in einem Empfänger eines Kommunikationssystems, wobei die Vorrichtung folgendes umfasst:
- Erste Feststellungs-Mittel (CORR, CALC, COMP1) zur Interpretation eines ersten Unter-Wortes (SUB1), das in dem Datenwort (WRD) enthalten ist, und zur Feststellung, ob eine erste Bedingung erfüllt ist oder nicht; **dadurch gekennzeichnet, dass** die Vorrichtung weiterhin folgendes enthält:
- Mindestens ein alternatives Feststellungs-Mittel (SIGN, INV, COMP2) zur Interpretation mindestens eines alternativen Unter-Wortes (SUB2), das in dem Datenwort (WRD) enthalten ist, und zur Feststellung, ob eine alternative Bedingung erfüllt ist oder nicht, wobei das alternative Unter-Wort (SUB2) mindestens teilweise das erste Unter-Wort (SUB1) überlappt;
- Kombinations-Mittel (STATE2) zur Kombination der Ergebnisse der ersten Feststellungs-Mittel und des mindestens einen alternativen Feststellungs-Mittels und zur Feststellung, ob das Codewort (COD) erkannt wurde oder nicht.

6. Eine Vorrichtung zur Erkennung der Anwesenheit eines Kodewortes (COD) in einem ankommenden Datenwort (WRD) gemäß Anspruch 5, **dadurch gekennzeichnet, dass** das erste Feststellungs-Mittel (CORR, CALC, COMP1) folgendes enthält:
- Korrelations-Mittel (CORR) zur Durchführung einer Korrelation des ersten Unter-Wortes (SUB1) mit einem ersten Unter-Kodewort (COD1), das in dem Kodewort (COD) enthalten ist, und um dadurch ein korreliertes Signal bereitzustellen, welches das Ergebnis der Korrelation anzeigt;
- Berechnungs-Mittel (CALC) zur Berechnung der Leistung des korrelierten Signals und dadurch Bereitstellung eines Leistungswertes;
- Einen Vergleicher (COMP1) zum Vergleich des Leistungswertes mit einem vorher festgelegten Schwellwert, und zur Entscheidung, dass die erste Bedingung erfüllt ist, wenn der Leistungswert den vorher festgelegten Schwellwert überschreitet.

7. Eine Vorrichtung zur Erkennung der Anwesenheit eines Kodewortes (COD) in einem ankommenden Datenwort (WRD) gemäß Anspruch 5, **dadurch gekennzeichnet, dass** das mindestens eine alternative Feststellungs-Mittel (SIGN, INV, COMP2) folgendes enthält:
- Mittel zur Feststellung der Vorzeichen (SIGN) aufeinander folgender Symbole, die in dem alternativen Unter-Wort (SUB2) enthalten sind;
- Mittel zur Feststellung von Vorzeichen-Invertierungen (INV) zur Feststellung der Invertierungen zwischen den Vorzeichen;
- Vergleicher-Mittel (COMP2) zum Vergleich der Invertierungen mit erwarteten Invertierungen zwischen den Vorzeichen aufeinander folgender Symbole eines alternativen Unter-Kodewortes (COD2), das in dem Kodewort (COD) enthalten ist, und zur Feststellung, dass eine alternative Bedingung erfüllt ist, wenn die Invertierungen im Wesentlichen mit den erwarteten Invertierungen übereinstimmen.

8. Eine Vorrichtung zur Erkennung der Anwesenheit eines Kodewortes (COD) in einem ankommenden Datenwort (WRD) gemäß Anspruch 5, **dadurch gekennzeichnet, dass** die Vorrichtung in einem hybriden Faser-Koaxial-Netzwerk verwendet wird.

9. Ein Empfänger zur Verwendung in einem Kommunikationssystem zum Empfang ankommender Datenworte und zur Erlangung der Synchronisation von z.B. Rahmen, Phase oder Symbol, **dadurch gekennzeichnet, dass** der Empfänger eine Vorrichtung zur Erkennung der Anwesenheit eines Kodewortes (COD) in einem ankommenden Datenwort (WRD) gemäß einem beliebigen der Ansprüche 5 bis 8 enthält.

10. Ein Kommunikationssystem, **dadurch gekennzeichnet, dass** das Kommunikationssystem eine Vorrichtung zur Erkennung der Anwesenheit eines Kodewortes (COD) in einem ankommenden Datenwort (WRD) gemäß einem beliebigen der Ansprüche 5 bis 8 enthält.

## Revendications

1. Procédé pour détecter la présence d'un mot de code (COD) dans un mot de données entrant (WRD) à utiliser par exemple dans un récepteur d'un système de communication, ledit procédé comprenant l'étape consistant à :
- déterminer par l'interprétation d'un premier sous-mot (SUB1) compris dans ledit mot de données (WRD) si une première condition est réalisée ou non ;
**caractérisé en ce que** ledit procédé comprend en outre les étapes consistant à :
- déterminer par l'interprétation d'au moins un sous-mot en variante (SUB2) compris dans ledit mot de données (WRD) si au moins une condition en variante est réalisée ou non, ledit sous-mot en variante (SUB2) coïncidant au moins partiellement avec ledit premier sous-mot (SUB1) ;
- combiner les résultats des étapes précédentes pour déterminer si ledit mot de code (COD) a été détecté ou non.

2. Procédé selon la revendication 1, **caractérisé en ce que** ladite étape de détermination si ladite première condition est réalisée ou non comprend les étapes consistant à :
- effectuer la corrélation dudit premier sous-mot (SUB1) avec un premier sous-mot de code prédéterminé (COD1) compris dans ledit mot de code (COD) et fournir un signal corrélé qui indique le résultat de ladite corrélation;
- calculer la puissance dudit signal corrélé et fournir ainsi une valeur de puissance ;
- comparer ladite valeur de puissance à une valeur de seuil prédéterminée, ladite première condition étant réalisée quand ladite valeur de puissance dépasse ladite valeur de seuil prédéterminée.

3. Procédé selon la revendication 1, **caractérisé en ce que** ladite étape de détermination si ladite au moins une condition en variante est réalisée ou non comprend les étapes consistant à :
- déterminer les signes des symboles consécutifs compris dans un dit sous-mot en variante (SUB2) ;
- déterminer les inversions entre lesdits signes ;
- comparer lesdites inversions à des inversions attendues entre les signes des symboles consécutifs d'un sous-mot de code en variante prédéterminé (COD2) compris dans ledit mot de code (COD), ladite condition en variante étant réalisée lorsque lesdites inversions correspondent substantiellement auxdites inversions attendues.

4. Procédé selon la revendication 1, **caractérisé en ce que** ledit procédé est destiné à une utilisation dans un réseau hybride fibre optique/ câble coaxial.

5. Dispositif pour détecter la présence d'un mot de code (COD) dans un mot de données entrant (WRD) à utiliser par exemple dans un récepteur d'un système de communication, ledit dispositif comprenant :
- des premiers moyens de détermination (CORR, CALC, COMP1) pour interpréter un premier sous-mot (SUB1) compris dans ledit mot de données (WRD) et pour déterminer si une première condition est réalisée ou non ;
**caractérisé en ce que** ledit dispositif comprend en outre :
- au moins un moyen de détermination en variante (SIGN, INV, COMP2) pour interpréter au moins un sous-mot en variante (SUB2) compris dans ledit mot de données (WRD) et pour déterminer si au moins une condition en variante est réalisée ou non, ledit sous-mot en variante (SUB2) coïncidant au moins partiellement avec ledit premier sous-mot (SUB1) ;
- des moyens de combinaison (STATE2) pour combiner les résultats desdits premiers moyens de détermination et dudit au moins un moyen de détermination en variante et pour déterminer si ledit mot de code (COD) a été détecté ou non.

6. Dispositif pour détecter la présence d'un mot de code (COD) dans un mot de données entrant (WRD) selon la revendication 5, **caractérisé en ce que** lesdits premiers moyens de détermination (CORR, CALC, COMP1) comprennent :
- des moyens de corrélation (CORR) pour effectuer une corrélation dudit premier sous-mot (SUB1) avec un premier sous-mot de code (COD1) compris dans ledit mot de code (COD) et pour fournir ainsi un signal corrélé qui indique le résultat de ladite corrélation ;
- des moyens de calcul (CALC) pour calculer la puissance dudit signal corrélé et pour fournir ainsi une valeur de puissance ;
- un comparateur (COMP1) pour comparer ladite valeur de puissance à une valeur de seuil prédéterminée et pour décider que ladite première condition est réalisée lorsque ladite valeur de puissance dépasse ladite valeur de seuil prédéterminée.

7. Dispositif pour détecter la présence d'un mot de code (COD) dans un mot de données entrant (WRD) selon la revendication 5, **caractérisé en ce que** ledit au moins un moyen de détermination en variante (SIGN, INV, COMP2) comprend :
- des moyens de détection de signe (SIGN) pour déterminer le signe des symboles consécutifs compris dans un dit sous-mot en variante (SUB2) ;
- des moyens de détection d'inversion (INV) pour déterminer les inversions entre lesdits signes ;
- des moyens de comparaison (COMP2) pour comparer lesdites inversions à des inversions attendues entre les signes des symboles consécutifs d'un sous-mot de code en variante (COD2) compris dans ledit mot de code (COD) et pour décider qu'une dite condition en variante est réalisée quand lesdites inversions correspondent substantiellement auxdites inversions attendues.

8. Dispositif pour détecter la présence d'un mot de code (COD) dans un mot de données entrant (WRD) selon la revendication 5, **caractérisé en ce que** ledit dispositif est utilisé dans un réseau hybride fibre optique/ câble coaxial.

9. Récepteur à utiliser dans un système de communication pour recevoir des mots de données entrants et pour acquérir la synchronisation par exemple d'une trame, d'une phase ou d'un symbole, **caractérisé en ce que** ledit récepteur comprend un dispositif pour détecter la présence d'un mot de code (COD) dans un mot de données entrant (WRD) selon l'une quelconque des revendications 5 à 8.

10. Système de communication, **caractérisé en ce que** ledit système de communication comprend un dispositif pour détecter la présence d'un mot de code (COD) dans un mot de données entrant (WRD) selon l'une quelconque des revendications 5 à 8.
